# EUROPEAN PATENT SPECIFICATION

(11) **EP 4 344 155 B1**
(45) Date of publication and mention of the grant of the patent: **23.04.2025**
(21) Application number: 22885989.8
(22) Date of filing: 26.10.2022
(51) Int. Cl.: H04L 47/215

(54) **PACKET SCHEDULING METHOD AND APPARATUS**
PAKETPLANUNGSVERFAHREN UND -VORRICHTUNG
PROCÉDÉ ET APPAREIL DE PLANIFICATION DE PAQUETS

(30) Priority: 28.10.2021 CN 202111266385
(43) Date of publication of application: 27.03.2024
(73) Proprietor: Huawei Technologies Co., Ltd., Longgang Shenzhen, Guangdong 518129 (CN)
(72) Inventor: ZHANG, Yongping, Shenzhen, Guangdong 518129 (CN)
(74) Representative: Körber, Martin Hans
(86) International application number: PCT/CN2022/127533
(87) International publication number: WO 2023/072112

(56) References cited:
- EP-A1- 1 705 851
- WO-A1-2021/098730
- CN-A- 109 218 215
- CN-A- 110 572 329
- CN-A- 113 422 736
- US-A1- 2011 243 139
- US-B1- 8 045 456
- YANG, XU: "An SDN Architecture-based Dynamic Traffic Monitoring Method", DIGITAL COMMUNICATION WORLD, SHU ZI TONG XIN SHI JIE BIAN JI BU, CN, no. 2, 28 February 2021 (2021-02-28), CN , pages 78 - 81, XP009545932, ISSN: 1672-7274

## Description

### TECHNICAL FIELD

This application relates to the field of communication technologies, and in particular, to a packet scheduling method and apparatus.

### BACKGROUND

Quality of service (quality of service, QoS) is an indicator reflecting a network status, and the network status includes a state such as network delay or network congestion. To ensure QoS of a network, a packet received by a network device may be added to a queue, and a packet cached in the queue is removed from the queue based on a specific policy.

In combination with a token-bucket (Token-Bucket) technology, the packet stored in the queue is scheduled, and a traffic burst can be shaped. Specifically, a rate at which a token is injected into the token bucket may be limited, to limit a rate at which the packet is removed from the queue. If a rate at which the packet is added to the queue reaches or exceeds the rate at which the token is injected into the token bucket, scheduling of the packet in the queue may be suspended. In this way, burst shaping is implemented.

Further, a combination of a plurality of token buckets may further reduce impact of a burst. The patent EP 1 705 851 discloses such an example of issuing tokens to packets from two token buckets. Specifically, if the rate at which the packet is added to the queue is low, the packet may be removed from the queue through scheduling of one token bucket. If the rate at which the packet is added to the queue is high, the packet may be removed from the queue through scheduling of a plurality of token buckets. However, if the packet in the queue is scheduled by using a plurality of token buckets, a problem of frequent token bucket switching may occur.

### SUMMARY

Embodiments of this application provide a packet scheduling method and apparatus, to reduce a frequency of token bucket switching. The present invention is defined as the subject matter of the claims.

### BRIEF DESCRIPTION OF DRAWINGS

FIG. 1 is a schematic diagram of an architecture of a system 100 according to an embodiment of this application;
FIG. 2 is a schematic flowchart of a packet scheduling method according to an embodiment of this application;
FIG. 3 is a method flowchart of a packet scheduling method according to an embodiment of this application;
FIG. 4 is a schematic diagram of a structure of a packet scheduling apparatus 400 according to an embodiment of this application;
FIG. 5 is a schematic diagram of a structure of a device 500 according to an embodiment of this application; and
FIG. 6 is a schematic diagram of a structure of a device 600 according to an embodiment of this application.

### DESCRIPTION OF EMBODIMENTS

The following describes, with reference to the accompanying drawings, the conventional technology and the packet scheduling method provided in embodiments of this application.

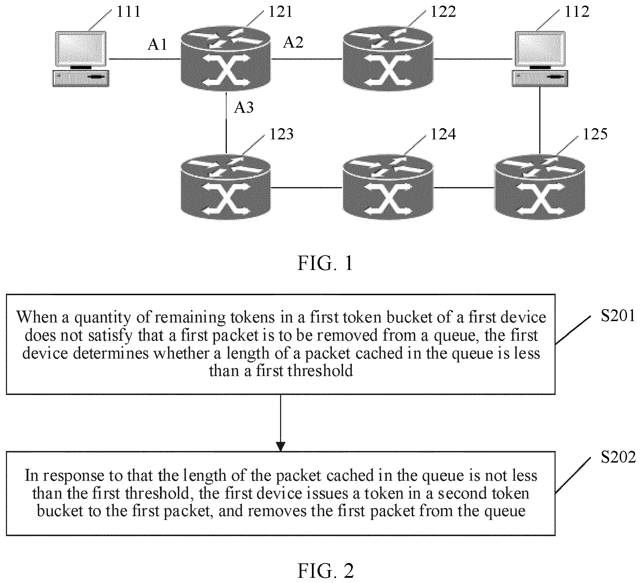

FIG. 1 is a schematic diagram of a structure of a system 100 according to an embodiment of this application. The system 100 includes a device 111, a device 112, a network device 121, a network device 122, a network device 123, a network device 124, and a network device 125. The network device 121 is separately connected to the device 111, the network device 122, and the network device 123, the network device 124 is separately connected to the network device 123 and the network device 125, and the device 112 is separately connected to the network device 122 and the network device 125. The network device 121 is connected to the device 111 through a network interface A1, the network device 121 is connected to the network device 122 through a network interface A2, and the network device 121 is connected to the network device 123 through a network interface A3. Through the network devices in the system, the devices can send packets to each other. For example, the device 111 may send a packet to the device 112 through a path "network device 121→network device 122", or may send a packet to the device 112 through a path "network device 121→network device 123→network device 124-network device 125".

To avoid a traffic burst, one or more token buckets may be configured in the network device 121 to determine whether a packet in a queue of the network device 121 can be removed from the queue. If a quantity of remaining tokens in a token bucket can satisfy that a packet is to be removed from a queue, the packet may be removed from the queue through scheduling, and subsequent processing is performed on the packet based on the token bucket corresponding to the packet removed from the queue.

For example, it is assumed that the network device 121 includes a first token bucket and a second token bucket. In a process of scheduling a packet X to be removed from a queue, the network device 121 may first determine whether a quantity of remaining tokens in the first token bucket satisfies that the packet X is to be removed from the queue. If the quantity of remaining tokens in the first token bucket satisfies that the packet X is to be removed from the queue, the network device 121 may issue a token in the first token bucket to the packet X, and remove the packet X from the queue. If the quantity of remaining tokens in the first token bucket does not satisfy that the packet X is to be removed from the queue, the network device 121 may determine whether a quantity of remaining tokens in the second token bucket satisfies that the packet X is to be removed from the queue. If the quantity of remaining tokens in the second token bucket satisfies that the packet X is to be removed from the queue, the network device 121 may issue a token in the second token bucket to the packet X, and remove the packet X from the queue.

After the packet X is removed from the queue, the packet X may be processed based on the token issued to the packet X. For example, in an application scenario shown in FIG. 1, if the packet X is a packet sent by the device 111 to the device 112, the network device 121 may determine a forwarding path of the packet based on the token of the packet X. If the token in the first token bucket is issued to the packet X, the network device 121 may send the packet X through the path "network device 121 →network device 122". If the token corresponding to the second token bucket is issued to the packet X, the network device 121 may send the packet X through the path "network device 121→network device 123-network device 124-network device 125".

In this way, if the network device 121 receives a large quantity of packets in a short time, the network device 121 may forward the packets through two different paths. In this way, impact of the traffic burst on a network system can be reduced. It may be understood that, even if the network device 121 does not forward the packets through two different paths, the network device 121 may still perform differentiated processing on the packet to which the token in the first token bucket is issued and the packet to which the token in the second token bucket is issued, to achieve an objective of traffic shaping.

However, a conventional method for performing packet scheduling by using a plurality of token buckets may have a problem of frequent token bucket switching, and consequently, a processing method corresponding to a token bucket may be invoked frequently, which affects the network system. Specifically, if different token buckets correspond to different forwarding paths, frequent token bucket switching may cause actual utilization of a path to be lower than utilization achievable by the path.

For example, in the foregoing application scenario, when a rate at which a packet is added to a queue is greater than a rate at which a token is injected into the first token bucket, the network device 121 may schedule and remove the packet from the queue by using the second token bucket; or when a rate at which a packet is added to a queue is less than or equal to a rate at which a token is injected into the first token bucket, the network device 121 may schedule and remove the packet from the queue by using the first token bucket. In this case, if the rate at which a packet is added to a queue fluctuates around the rate at which a token is injected into the first token bucket, the network device 121 repeatedly performs switching between the first token bucket and the second token bucket for a plurality of times when issuing a token in a token bucket to the packet. If the token in the first token bucket and the token in the second token bucket respectively correspond to different paths, utilization of a path by the network device 121 may be lower than actually achievable utilization of the path.

It is assumed that a token is injected into the first token bucket of the network device 121 at a rate V; a packet is added to a queue of the network device 121 at a rate of 0.5 V between a moment t1 and a moment t2; the packet is added to the queue of the network device 121 at a rate of 1.5 V between the moment t2 and a moment t3; and the packet is added to the queue of the network device 121 at a rate of 0.5 V between the moment t3 and a moment t4. Correspondingly, the network device 121 may forward the packet through the path "network device 121→network device 122" between the moment t1 and the moment t2, and a rate of forwarding the packet corresponds to 0.5 V; the network device 121 may forward a part of the packet through the path "network device 121→network device 122" and forward a remaining part of the packet through the path "network device 121→network device 123-network device 124→network device 125" between the moment t2 and the moment t3, a rate of forwarding the packet through the path "network device 121→network device 122" corresponds to V, and a rate of forwarding the packet through the path "network device 121→network device 123→network device 124-network device 125" corresponds to 0.5 V; and the network device 121 may forward the packet through the path "network device 121→network device 122" between the moment t3 and the moment t4, and a rate of forwarding the packet corresponds to 0.5 V.

It can be learned that, the rate at which the network device 121 forwards the packet through the path "network device 121-network device 122" corresponds to 0.5 V between the moment t1 and the moment t2 and before the moment t3 and the moment t4. In a process from the moment t1 to the moment t4, an average rate at which the network device 121 forwards the packet through the path "network device 121→network device 122" is lower than a rate corresponding to V. In other words, in the process from the moment t1 to the moment t4, utilization of the path "network device 121→network device 122" by the network device 121 does not reach 100%, but the network device 121 may forward the packet through another path. Consequently, actual utilization of the path "network device 121→network device 122" by the network device 121 is lower than maximum utilization, and utilization of the path "network device 121→network device 122" by the network device 121 is low.

It may be understood that, even if different token buckets correspond to a same forwarding path, if different token buckets correspond to different processing manners, a problem of frequent token bucket switching may still exist in the conventional packet scheduling method, which may cause a problem that actual utilization of processing manners corresponding to some token buckets is lower than achievable theoretical utilization.

To resolve the foregoing problem of frequent token bucket switching, embodiments of this application provide a packet scheduling method and apparatus, to reduce a frequency of token bucket switching, and further improve utilization of a processing manner corresponding to a token bucket.

The packet scheduling method provided in this embodiment of this application may be applied to the system shown in FIG. 1. Specifically, the method may be performed by any one or more of the network device 121, the network device 122, the network device 123, the network device 124, and the network device 125 in the embodiment shown in FIG. 1. The network device may be a device having a forwarding function, for example, a forwarding device such as a router (router) or a switch (switch), or may be a device having a forwarding function such as a server or a terminal device. Specifically, it is assumed that the packet scheduling method provided in this embodiment of this application is performed by the network device 121. For example, the method may be for scheduling a packet received by the network device 121 through a network port A1. Optionally, the device 111 and the device 112 may be terminal devices, servers, or other devices.

In some possible implementations, the packet scheduling method provided in this embodiment of this application may also be performed by an access device. For example, the method may be performed by an access device having a BRAS function, and is for scheduling a packet that is received by the access device and is from a terminal device.

FIG. 2 is a schematic flowchart of a packet scheduling method according to an embodiment of this application. The method includes the following steps.

S201: When a quantity of remaining tokens in a first token bucket of a first device does not satisfy that a first packet is to be removed from a queue, the first device determines whether a length of a packet cached in the queue is less than a first threshold.

The first device may be a network device or an access device in a network system. For example, in the embodiment shown in FIG. 1, the first device may be any one of the network device 121, the network device 122, the network device 123, the network device 124, and the network device 125. In this embodiment of this application, the first device has at least two token buckets: a first token bucket and a second token bucket, and further has a queue for caching a packet. The following describes the token bucket and queue.

The first token bucket is a token bucket that the first device has, and may be configured to store a token. Optionally, the token stored in the first token bucket may be referred to as a first token. The first device may inject the first token into the first token bucket at a first preset rate. Optionally, the first token bucket may have a first threshold, indicating a maximum quantity of tokens that can be accommodated by the first token bucket. After a quantity of remaining tokens in the first token bucket reaches the first threshold, the quantity of remaining tokens in the first token bucket does not continue to increase.

Similar to the first token bucket, the second token bucket is also a token bucket that the first device has, and is configured to store a token. The token stored in the second token bucket may be referred to as a second token, a maximum quantity of tokens that can be accommodated by the second token bucket may be referred to as a second threshold, and a rate at which the first device injects the second token into the second token bucket may be referred to as a second preset rate. It may be understood that, it is assumed that different token buckets may correspond to different forwarding priorities, and a forwarding priority of the second token bucket may be lower than a forwarding priority of the first token bucket. In a process of scheduling and removing a packet from the queue, the first device may preferentially schedule and remove the packet from the queue by using the first token bucket.

Optionally, in some possible implementations, the first token bucket may be referred to as a C token bucket, and the second token bucket may be referred to as a P token bucket.

It should be noted that technical features such as the "token bucket" and the "token" in this embodiment of this application may be virtual concepts, and do not represent a bucket or a token of an entity. For example, in some possible implementations, a variable of a floating point number type or an integer type may indicate the quantity of remaining tokens in the first token bucket or a quantity of remaining tokens in the second token bucket. Optionally, the first threshold and the second threshold may be the same or may be different; and the first preset rate and the second preset rate may be the same or may be different.

In the first device, the queue for caching a packet may also be referred to as a cache queue. After receiving, through a network interface, a packet sent by another device, the first device may first add the packet to the cache queue. A packet stored in the cache queue may be removed from the queue by using the first token bucket or the second token bucket. Optionally, the cache queue may have a queue upper limit. After a quantity of packets cached in the cache queue reaches the queue upper limit, the first device no longer adds a newly received packet to the cache queue. For example, the first device may discard a packet received after the quantity of packets cached in the cache queue reaches the queue upper limit. The queue upper limit may be determined by storage space allocated by the first device to the cache queue, or may be divided by a skilled person based on an actual application situation. The quantity of packets may indicate a quantity of packets or a total quantity of bytes of packets.

Optionally, after receiving a new packet, the first device may add the packet to a tail of the queue. However, in a process of scheduling and removing a packet from the queue, the first device may preferentially schedule a packet located at a head of the queue. In other words, the first device may schedule the packet based on a time at which the packet is added to the queue. An earlier time at which the packet is added to the queue indicates an earlier time at which the packet is removed from the queue. Correspondingly, the "first packet" described below may be the 1^{st} packet located at the head of the queue in the queue.

After the first device determines that a determining trigger condition is satisfied, the first device may determine whether the quantity of remaining tokens in the first token bucket satisfies that the first packet is to be removed from the queue. The determining trigger condition indicates possibility that the first packet is to be removed from the queue. Specifically, the determining trigger condition may include any one or more of the following: the quantity of remaining tokens in the first token bucket increases, the quantity of remaining tokens in the second token bucket increases, the network device adds a new packet to the queue, and the network device removes a packet from the queue. Optionally, that the quantity of remaining tokens in the first token bucket satisfies that the first packet is to be removed from the queue may include that the quantity of remaining tokens in the first token bucket is greater than or equal to a quantity of bytes of the first packet.

In this embodiment of this application, the first device may perform a corresponding operation based on a determining result. The following separately describes two possible implementations corresponding to two determining results.

In a first possible implementation, the first device determines that the quantity of remaining tokens in the first token bucket cannot satisfy the condition that the first packet is to be removed from the queue. In this case, the first device may determine whether the length of the packet cached in the queue is less than the first threshold, and schedule the first packet based on a determining result. That the quantity of remaining tokens in the first token bucket cannot satisfy the condition that the first packet is to be removed from the queue may include that the quantity of remaining tokens in the first token bucket is less than the quantity of bytes of the first packet.

In this embodiment of this application, the first threshold may be a threshold for enabling the second token bucket. Before scheduling and removing the packet from the queue by using the second token bucket, the first device may first determine that the length of the packet cached in the queue is greater than the first threshold. Optionally, the length of the packet cached in the queue may include a total quantity of bytes of all packets cached in the queue, and a unit of the first threshold may be byte (Byte). In some possible implementations, the length of the packet cached in the queue may also include a total quantity of packets cached in the queue.

In a second possible implementation, the first device determines that the quantity of remaining tokens in the first token bucket can satisfy the condition that the first packet is to be removed from the queue. In this case, the first device may issue a token in the first token bucket to the first packet, and remove the first token bucket from the queue. Issuing the token in the first token bucket to the first packet is to process the first packet in a processing manner corresponding to the first token bucket in a subsequent processing process. Optionally, the issuing the token in the first token bucket to the first packet may include adding a marker corresponding to the first token bucket to the first packet, or may include recording the first packet as a packet that is scheduled, by using the first token bucket, to be the removed from the queue. For descriptions of a processing method corresponding to the token in the first token bucket, refer to the following descriptions. Details are not described herein again.

Optionally, if the token in the first token bucket is issued to the first packet, the first device may adjust the quantity of remaining tokens in the first token bucket based on the first packet after the first packet is removed from the queue. For example, the first device may remove some or all tokens from the first token bucket, and a quantity of removed tokens may be equal to a quantity of bytes of a target packet. Assuming that a quantity of tokens represents a quantity of bytes that can be scheduled, after a packet whose quantity of bytes is i is removed from the queue through scheduling, the first device may remove i tokens from the first token bucket.

S202: In response to that the length of the packet cached in the queue is not less than the first threshold, the first device issues a token in the second token bucket to the first packet, and removes the first packet from the queue.

If the first device determines that the length of the packet cached in the queue is not less than the first threshold, the first device may issue the token in the second token bucket to the first packet, and remove the first packet from the queue. The first threshold is a threshold for the first device to enable the second token bucket to perform packet scheduling. If the length of the packet cached in the queue is greater than or equal to the first threshold, the first device may enable the second token bucket to schedule the packet cached in the queue to be removed from the queue. Optionally, the first threshold may indicate a length of a packet that may cause network congestion, for example, may be 50% of the foregoing queue threshold. Alternatively, the first threshold may be determined based on a burst limit that can be tolerated in the processing manner corresponding to the first token bucket. In other words, in the processing manner corresponding to the first token bucket, that a packet less than or equal to the first threshold is not scheduled can be tolerated.

Optionally, the length of the packet cached in the queue may be a quantity of packets cached in the queue, or may be a total quantity of bytes of the packets cached in the queue.

In this embodiment of this application, the first device issues the token in the second token bucket to the first packet, to process the first packet in a processing manner corresponding to the second token bucket in a subsequent processing process. Optionally, the issuing the token in the second token bucket to the first packet may include adding a marker corresponding to the second token bucket to the first packet, or may include recording the first packet as a packet that is scheduled, by using the second token bucket, to be removed from the queue. For descriptions of a processing method corresponding to the token in the second token bucket, refer to the following descriptions. Details are not described herein again.

Similar to the token in the first token bucket, if the token in the second token bucket is issued to the first packet, the first device may adjust the quantity of remaining tokens in the second token bucket based on the first packet after the first packet is removed from the queue.

In some possible cases, the quantity of remaining tokens in the second token bucket may not satisfy that the first packet is to be removed from the queue. For example, the quantity of remaining second tokens in the second token bucket may be less than the quantity of bytes of the first packet. In this case, the first device may not remove the first packet from the queue. In other words, when neither the quantity of remaining tokens in the first token bucket nor the quantity of remaining tokens in the second token bucket satisfies that the first packet is to be removed from the queue, the first device may keep the first packet in the queue. Because a quantity of remaining tokens in a token bucket may gradually increase with time, the first device may wait until the quantity of remaining tokens in the first token bucket (or the second token bucket) is accumulated to satisfy the condition that the first packet is to be removed from the queue, and then remove the first packet from the queue.

In this embodiment of this application, the first threshold is the threshold for the first device to enable the second token bucket. In this case, if the length of the packet cached in the queue of the first device is less than the first threshold, it indicates that the queue does not reach the threshold for the first device to enable the second token bucket, and the first device may not schedule and remove the packet from the queue by using the second token bucket. It may be understood that, even if the quantity of remaining tokens in the first token bucket does not satisfy the condition that the first packet is to be removed from the queue, if the length of the packet cached in the queue is less than the first threshold, the first device may not schedule and remove the first packet from the queue, and keep the first packet in the cache queue. In other words, in addition to a status of the first token bucket, the first device may further determine, based on the length of the packet cached in the queue, whether to use the second token bucket to schedule and remove the first packet from the queue. In this way, by determining whether the length of the packet cached in the queue is less than the first threshold, when the quantity of remaining tokens in the first token bucket is insufficient, the first device does not directly schedule and remove the packet from the queue by using the second token bucket, so that frequent switching between the first token bucket and the second token bucket is avoided, and utilization of the processing manner corresponding to the first token bucket is improved.

For example, it is assumed that a rate at which a packet is added to a queue fluctuates up and down based on the first preset rate. When the rate at which a packet is added to a queue is higher than the first preset rate, the quantity of remaining tokens in the first token bucket may not satisfy that the packet is to be removed from the queue. In this case, the first device may keep, in the queue, the packet that is added to the queue but cannot be scheduled. When the rate at which a packet is added to a queue is lower than the first preset rate, the packet added to the queue cannot fully consume the token injected into the first token bucket. In this case, the remaining tokens in the first token bucket may be configured to schedule the packet cached in the queue to be removed from the queue, thereby reducing the quantity of packets cached in the queue. In this way, it is equivalent to using the token injected into the first token bucket when the rate at which a packet is added to a queue is low, and scheduling is performed on a packet that cannot be scheduled in the queue when the rate at which a packet is added to a queue is high. In this way, the queue is used as a buffer, so that frequent switching between the first token bucket and the second token bucket is avoided, and traffic shaping of a packet flow is implemented.

The foregoing describes a method in which the first device schedules and removes the first packet from the queue. The following describes a method for processing, by the first device, the first packet based on a token issued to the first packet after the first packet is removed from the queue.

In this embodiment of this application, the first device may determine a forwarding path of the first packet based on the token issued to the first packet, or may determine a forwarding priority of the first packet based on the token issued to the first packet. The following separately describes the two implementations.

In a first possible implementation, the first device determines the forwarding path of the first packet based on the token issued to the first packet. In other words, the token in the first token bucket corresponds to a forwarding path, and the token in the second token bucket may correspond to another forwarding path. In this embodiment of this application, the forwarding path corresponding to the token in the first token bucket may be referred to as a second path, and the forwarding path corresponding to the token in the second token bucket may be referred to as a first path.

It can be learned from the foregoing descriptions that, when the rate at which a packet is added to a queue is low, the first device may preferentially schedule and remove the packet from the queue by using the first token bucket. In other words, the network device may preferentially select the second path to forward the packet. In this case, the second path corresponding to the first token bucket may be a path with high link quality. That is, link quality of the second path may be higher than link quality of the first path.

Correspondingly, after the first packet is removed from the queue, the first device may determine the forwarding path of the first packet from the first path and the second path based on the token issued to the first packet, thereby determining an outbound interface for sending the first packet, and sending the first packet from the corresponding outbound interface. If the token in the first token bucket is issued to the first packet, the first device may forward the first packet through an outbound interface corresponding to the second path. If the token in the second token bucket is issued to the first packet, the first device may forward the first packet through an outbound interface corresponding to the first path.

The following uses FIG. 1 as an example for description. It is assumed that the first device is the network device 121 in FIG. 1, and the first packet is a packet X sent by the device 111 to the device 112. It can be learned from the structural diagram of the system shown in FIG. 1 that the network device 121 may receive the packet X through the network interface A1, and forward the packet through the network interface A2 or the network interface A3. Correspondingly, the method provided in this embodiment of this application may be applied to an inbound interface of the network device 121, namely, the network interface A1, configured to forward the packet X based on a status of a token bucket and a queue after the network device 121 receives the packet X.

Optionally, because a path "network device 121→network device 123→network device 124-network device 125" passes through a large quantity of network devices, link quality of the path "network device 121 -network device 123-network device 124-network device 125" may be low. For example, a delay value of the path may be high.

Therefore, the path "network device 121→network device 123-network device 124-network device 125" may be determined as the first path, and a path "network device 121→network device 122" may be determined as the second path.

After the packet X is removed from the queue, if the token in the first token bucket is issued to the packet X, the network device 121 may schedule the packet X to be removed from the queue through the network interface A2, so that the packet X is forwarded through the path "network device 121→network device 122"; or if the token in the second token bucket is issued to the packet X, the network device 121 may schedule the packet X to be removed from the queue through the network interface A3, so that the packet X is forwarded through the path "network device 121→network device 123→network device 124→network device 125". In this way, when a rate at which a packet is added to a queue is low, the network device 121 may forward the packet through the path "network device 121→network device 122" with high link quality. As the rate at which a packet is added to a queue increases, the network device 121 may share pressure of the path "network device 121→network device 122" through the path "network device 121-network device 123-network device 124-network device 125". In addition, the queue and the first threshold are used for buffering, so that frequent switching between the first token bucket and the second token bucket can be avoided, and traffic shaping of the packet flow is implemented.

In some possible implementations, a network type of an access network in which the first path is located may be different from a network type of an access network in which the second path is located. In other words, the first device may select, based on a situation in which a packet is added to a queue, different access networks to forward the packet. In this case, the access network in which the second path is located may have better performance than the access network in which the first path is located. The first device preferentially forwards the first packet through the second path, so that a QoS parameter of the first packet can be improved, or packet forwarding costs can be reduced.

For example, for a hybrid access aggregation point (Hybrid Access Aggregation Point, HAAP) in a hybrid access (Hybrid Access, HA) scenario, a user may be supported to be bound to two types of access networks: a digital subscriber line (Digital Subscriber Line, DSL) and/or long term evolution (Long Term Evolution, LTE). For some user services, the packet may be preferentially transmitted through a path corresponding to the DSL. When a bandwidth of the DSL is insufficient, the packet is transmitted through a path corresponding to the LTE. In this case, the first path may be the path corresponding to the LTE, and the second path may be the path corresponding to the DSL.

In some other possible implementations, a network type of a network in which the first path is located may be the same as a network type of a network in which the second path is located, but costs of forwarding the packet by using the network in which the first path is located may be different from costs of forwarding the packet by using the network in which the second path is located. For example, a bandwidth of the first path may be greater than a bandwidth of the second path. In this way, in a process of forwarding the packet, the first device may preferentially use the second path with a small bandwidth to forward the packet, and then use a first queue to forward the packet when the rate at which a packet is added to a queue is high and the bandwidth of the second path is greatly occupied. In this way, utilization of the second path can be improved, thereby reducing packet transmission costs.

In a second possible implementation, the first device determines the forwarding priority of the first packet based on the token issued to the first packet. The forwarding priority indicates the network device that forwards the first packet to forward the first packet. The first token bucket and the second token bucket respectively correspond to different forwarding priorities. As tokens issued to the first packet are different, forwarding priorities set by the first device for the first packet are also different. In this embodiment of this application, a forwarding priority corresponding to the token in the first token bucket is referred to as a second priority, and a forwarding priority corresponding to the token in the second token bucket is referred to as a first priority. Optionally, a forwarding priority of the first priority is lower than a forwarding priority of the second priority. That is, in a process of forwarding a packet, the device may preferentially forward a packet with a first priority.

After determining the forwarding priority of the first packet, the first device may forward the first packet based on the forwarding priority of the first packet. Optionally, the first device may add, to the first packet, a marker indicating the forwarding priority, and then send the marked first packet to a next-hop device. In this way, the next-hop device may determine the forwarding priority of the first packet based on the marker in the first packet, to select a forwarding manner corresponding to the forwarding priority to forward the first packet.

An example is used for description. It is assumed that the method provided in this embodiment of this application is applied to the network device 121 in FIG. 1, and the first packet is a packet Y sent by the device 111 to the device 112. After scheduling the packet Y to be removed from the queue, the network device 121 may determine a forwarding priority of the packet Y based on a token issued to the packet Y, and add a corresponding marker to the packet Y. Assuming that the token in the first token bucket is issued to the packet Y, the network device 121 may determine that the forwarding priority of the packet Y is the second priority, and add a marker corresponding to the second priority to the packet Y. For example, the network device may mark the packet Y in a green (Green) state. Assuming that the token in the second token bucket is issued to the packet Y, the network device 121 may determine that the forwarding priority of the packet Y is the first priority, and add a marker corresponding to the first priority to the packet Y. For example, the network device may mark the packet Y in a yellow (Yellow) state.

After adding the marker to the packet Y, the network device 121 may send the packet Y to the network device 122. A single rate three color marker (Single Rate Three Color Marker, SRTCM) algorithm or a two rate three color marker (Two Rate Three Color Marker, TRTCM) algorithm may be deployed on the network device 122. By using the SRTCM algorithm or the TRTCM algorithm, the network device 122 may determine a scheduling manner of the packet Y based on the marker in the packet Y, to forward the packet Y based on the forwarding priority.

In the foregoing descriptions, the first device may determine the forwarding path of the first packet based on the token issued to the first packet, or may determine the forwarding priority of the first packet based on the token issued to the first packet. In some possible implementations, the first device may determine the forwarding path and the forwarding priority of the first packet based on the token issued to the first packet.

For ease of understanding, the following uses an example in which the network device 121 is configured to receive a packet flow from the device 111, and a target device of each packet in the packet flow is the device 112 for description. The token in the first token bucket corresponds to the first path, and the token in the second token bucket corresponds to the second path.

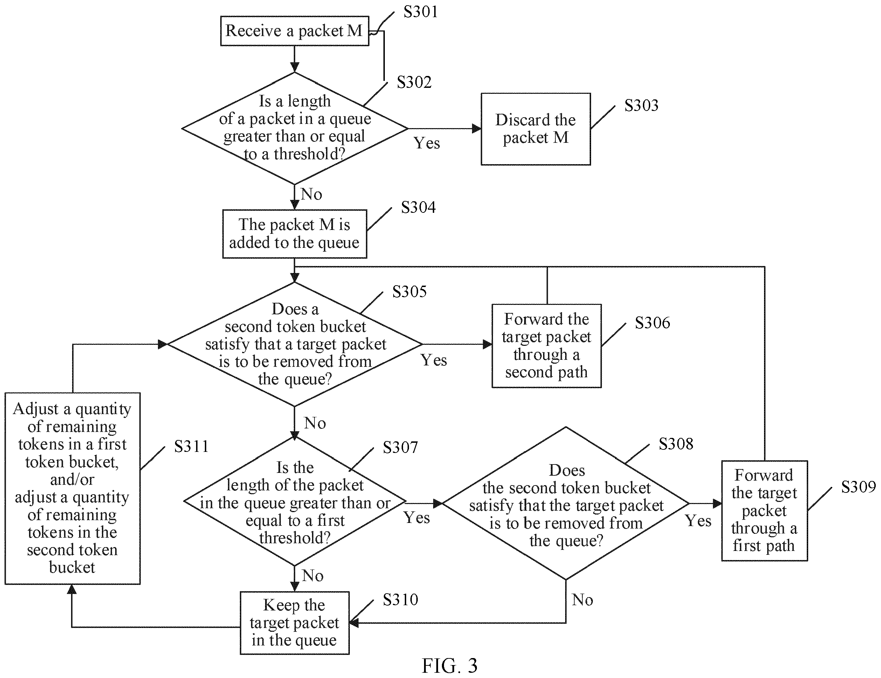

FIG. 3 is a method flowchart of a packet scheduling method according to an embodiment of this application. The method includes the following steps.

S301: A network device 121 receives a packet M.

As shown in FIG. 1, the network device 121 may receive, through a network interface A1, the packet M sent by a device 111. After the packet M receives the packet M, the network device 121 may serve as a first device to perform the packet scheduling method provided in this embodiment of this application.

S302: The network device 121 determines whether a length of a packet cached in a queue is not less than a threshold.

After receiving the packet M, the network device 121 may determine whether the length of the packet cached in the queue is not less than the threshold. The queue is a queue for storing a to-be-scheduled packet, and the threshold may be a maximum value of a length of a packet that can be accommodated by the queue, or a difference between a maximum value of a length of a packet that can be accommodated by the queue and a length of the packet M. Optionally, the threshold may be represented by a quantity of packets or a total quantity of bytes of packets.

If the length of the packet cached in the queue is greater than or equal to the threshold, it indicates that no new packet can be added to the queue, and the network device 121 may perform step S303. If the length of the packet cached in the queue is less than the threshold, the network device 121 may perform step S304.

Optionally, if the threshold is the difference between the maximum value of the length of the packet that can be accommodated by the queue and the length of the packet M, the network device 121 may also perform step S304 when the length of the packet cached in the queue is equal to the threshold.

S303: The network device 121 discards the packet M.

If the length of the packet cached in the queue is not less than the threshold, it indicates that the packet cached in the queue is equal to or close to a maximum capacity that can be accommodated by the queue, and the queue cannot accommodate another packet. As a result, the packet M cannot be added to the queue. In this case, the network device 121 may discard the packet M.

Optionally, in some possible implementations, the network device 121 may alternatively not discard the packet M when the length of the packet cached in the queue is greater than or equal to the threshold. For example, the network device 121 may store the packet M in another storage location different from the queue, to schedule the packet M when a condition is satisfied.

S304: The network device 121 adds the packet M to the queue.

If the length of the packet cached in the queue is less than the threshold, it indicates that the packet cached in the queue does not reach the maximum capacity that can be accommodated by the queue, and the queue can continue to accommodate another packet. In this case, the network device 121 may add the packet M to the queue, and continue to perform step S305. Optionally, the network device 121 may add the packet M to a tail of the queue.

S305: The network device 121 determines whether remaining tokens in a first token bucket satisfy that a target packet is to be removed from the queue.

After the packet M is added to the queue, the network device 121 may determine whether the remaining tokens in the first token bucket satisfy that the target packet is to be removed from the queue. The target packet is a packet that is cached in the queue and that is located at a head of the queue. That is, the target packet is the 1^{st} packet that needs to be scheduled in the to-be-scheduled packet. Optionally, before the target packet is removed from the queue, another packet in the queue is kept in the queue and is not removed from the queue. It may be understood that, as the target packet is removed from the queue, the network device 121 may determine, as a new target packet, a packet that is located at the head of the queue after the target packet is removed from the queue, that is, the target packet is always the 1^{st} to-be-scheduled packet in the queue.

Optionally, the network device 121 may determine, through comparison, whether a quantity of remaining tokens in the first token bucket is greater than or equal to a quantity of bytes of the target packet. If the quantity of remaining tokens in the first token bucket is greater than or equal to the quantity of bytes of the target packet, the network device may determine that the remaining tokens in the first token bucket satisfy that the target packet is to be removed from the queue, and perform step S306. If the quantity of remaining tokens in the first token bucket is greater than or equal to the quantity of bytes of the target packet, the network device may determine that the remaining tokens in the first token bucket do not satisfy that the target packet is to be removed from the queue, and perform step S307.

For a specific process of determining, by the network device 121, whether the remaining tokens in the first token bucket satisfy that the target packet is to be removed from the queue, refer to the descriptions in the embodiment corresponding to FIG. 2. Details are not described herein again.

S306: The network device 121 forwards the target packet through a second path.

If it is determined that the remaining tokens in the first token bucket satisfy that the target packet is to be removed from the queue, the network device 121 may issue a token in the first token bucket to the target packet, and schedule and remove the target packet from the queue. Then, the network device 121 may forward the target packet through the second path corresponding to the token in the first token bucket. In the application scenario shown in FIG. 1, the second path may be a path "network device 121→network device 122". For descriptions of determining a forwarding path by the network device 121, refer to the foregoing descriptions. Details are not described herein again.

After the target packet is removed from the queue through scheduling, the network device 121 may adjust the quantity of remaining tokens in the first token bucket. For example, some or all tokens may be removed from the first token bucket, and a quantity of removed tokens may be equal to the quantity of bytes of the target packet.

After the target packet is removed from the queue through scheduling, the network device 121 may determine the packet located at the head of the queue as the new target packet, and return to perform step S305.

S307: The network device 121 determines whether the length of the packet cached in the queue is not less than a first threshold.

If it is determined that the remaining tokens in the first token bucket do not satisfy that the target packet is to be removed from the queue, the network device 121 may further determine whether the length of the packet cached in the queue is less than the first threshold. If the length of the packet cached in the queue is not less than the first threshold, the network device 121 may perform step S308; or if the length of the packet cached in the queue is less than the first threshold, the network device 121 may perform step S310.

S308: The network device 121 determines whether remaining tokens in a second token bucket satisfy that the target packet is to be removed from the queue.

It can be learned from the foregoing descriptions that the "first threshold" in this embodiment of this application is a threshold for enabling the second token bucket to perform packet scheduling. If the length of the packet cached in the queue is greater than or equal to the first threshold, it indicates that the network device 121 may enable the second token bucket to schedule the packet. In a process of scheduling the packet by using the second token bucket, the network device 121 may first determine whether the remaining tokens in the second token bucket satisfy that the target packet is to be removed from the queue. For a specific process of determining, by the network device 121, whether the remaining tokens in the second token bucket satisfy that the target packet is to be removed from the queue, refer to the descriptions in the foregoing corresponding embodiment. Details are not described herein again.

If the remaining tokens in the second token bucket satisfy that the target packet is to be removed from the queue, it indicates that the second token bucket allows the network device 121 to remove the target packet from the queue based on the second token bucket, and the network device 121 may perform step S309; or if the remaining tokens in the second token bucket do not satisfy that the target packet is to be removed from the queue, it indicates that the network device 121 cannot schedule and remove the target packet from the queue by using the second token bucket, and the network device 121 may perform step S310.

S309: The network device 121 forwards the target packet through a first path.

If it is determined that the remaining tokens in the second token bucket satisfy that the target packet is to be removed from the queue, the network device 121 may issue a token in the second token bucket to the target packet, and schedule and remove the target packet from the queue. Then, the network device 121 may forward the target packet through the first path corresponding to the token in the second token bucket. In the application scenario shown in FIG. 1, the first path may be a path "network device 121→network device 123→network device 124→network device 125". For descriptions of determining a forwarding path by the network device 121, refer to the foregoing descriptions. Details are not described herein again.

Similar to step S306, the network device 121 may adjust a quantity of remaining tokens in the second token bucket after the target packet is removed from the queue through scheduling. For example, some or all tokens may be removed from the second token bucket, and a quantity of removed tokens may be equal to the quantity of bytes of the target packet. In addition, after the target packet is removed from the queue through scheduling, the network device 121 may determine the packet located at the head of the queue as the new target packet, and return to perform step S305.

S310: The network device 121 keeps the target packet in the queue.

If the length of the packet cached in the queue is less than the first threshold, or the remaining tokens in the second token bucket do not satisfy that the target packet is to be removed from the queue, the network device 121 may keep the target packet in the queue, and do not schedule and remove the target packet from the queue. Specifically, if the length of the packet cached in the queue is less than the first threshold, the network device 121 does not enable the second token bucket to schedule the packet. In this case, because the remaining tokens in the first token bucket do not satisfy that the target packet is to be removed from the queue, the network device 121 may keep the target packet in the queue, and does not schedule and remove the target packet from the queue. If the remaining tokens in the second token bucket do not satisfy that the target packet is to be removed from the queue, even if the length of the packet cached in the queue is greater than or equal to the first threshold, the second token bucket is insufficient to remove the target packet from the queue. In this case, the network device 121 may keep the target packet in the queue, and does not schedule and remove the target packet from the queue.

It should be noted that, when the length of the packet cached in the queue is less than the first threshold, regardless of the quantity of remaining tokens in the second token bucket, the network device 121 may not enable the second token bucket to schedule the packet, and keeps the target packet not removed from the queue.

It may be understood that, in some possible cases, as the new packet is added to the queue, the length of the packet cached in the queue is increased from being less than the first threshold to being the first threshold or being greater than the first threshold. In this case, after determining that the length of the packet cached in the queue is increased to the first threshold or greater than the first threshold, the network device 121 may enable the second token bucket to schedule the target packet.

S311: The network device 121 adjusts the quantity of remaining tokens in the first token bucket, and/or adjusts the quantity of remaining tokens in the second token bucket.

In a packet scheduling process, the network device 121 may adjust the quantity of remaining tokens in the first token bucket based on a first preset rate, and/or the network device 121 may adjust the quantity of remaining tokens in the second token bucket based on a second preset rate. Optionally, the network device may periodically inject tokens into the first token bucket and/or the second token bucket.

After the token is injected into the first token bucket or the second token bucket, the network device 121 may return to perform step S305, to determine whether the token bucket satisfies the condition that the packet is to be removed from the queue.

It should be noted that, for ease of description, in the flowchart shown in FIG. 3, step S311 is performed after step S310. Actually, there is no sequence relationship between injection of the token in the token bucket and keeping of the target packet in the queue, that is, step S311 may be performed at any moment. In an actual application scenario, adjustment of a level quantity of remaining tokens in a token bucket is irrelevant to whether a packet is to be removed from a queue.

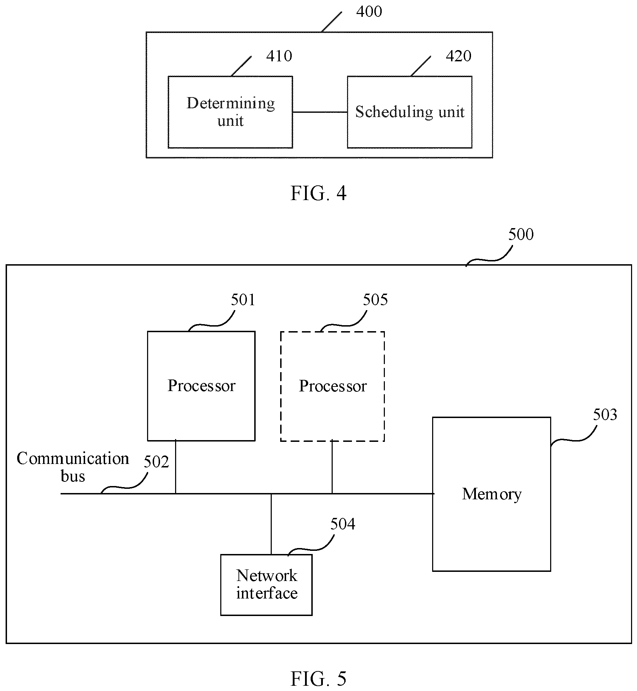

Refer to FIG. 4. An embodiment of this application further provides a packet scheduling apparatus 400. The packet scheduling apparatus 400 may implement functions of the first device in the embodiment shown in FIG. 2 or FIG. 3. The packet scheduling apparatus 400 includes a determining unit 410 and a scheduling unit 420. The determining unit 410 is configured to implement S201 in the embodiment shown in FIG. 2, and the scheduling unit 420 is configured to implement S202 in the embodiment shown in FIG. 2.

Specifically, the determining unit 410 is configured to: when a quantity of remaining tokens in a first token bucket does not satisfy that a first packet is to be removed from a queue, determine whether a length of a packet cached in the queue is less than a first threshold.

The scheduling unit 402 is configured to: in response to that the length of the packet cached in the queue is not less than the first threshold, issue a token in a second token bucket to the first packet, and remove the first packet from the queue.

For a specific execution process, refer to detailed descriptions of corresponding steps in the embodiment shown in FIG. 2 or FIG. 3. Details are not described herein again.

It should be noted that, in this embodiment of this application, division into the units is an example, and is merely a logical function division. During actual implementation, another division manner may be used. Functional units in embodiments of this application may be integrated into one processing unit, or each of the units may exist alone physically, or two or more units are integrated into one unit. For example, in the foregoing embodiment, the scheduling unit and the determining unit may be a same unit or different units. The integrated unit may be implemented in a form of hardware, or may be implemented in a form of a software functional unit.

FIG. 5 is a schematic diagram of a structure of a device 500 according to an embodiment of this application. The foregoing packet scheduling apparatus 400 may be implemented by using the device shown in FIG. 5. Refer to FIG. 5. The device 500 includes at least one processor 501, a communication bus 502, and at least one network interface 504. Optionally, the device 500 may further include a memory 503.

The processor 501 may be a general-purpose central processing unit (Central Processing Unit, CPU), an application-specific integrated circuit (Application-specific Integrated Circuit, ASIC), or one or more integrated circuits (Integrated Circuit, IC) configured to control program execution of the solution of this application. The processor may be configured to process a packet and a token bucket, to implement the packet scheduling method provided in embodiments of this application.

For example, when the first device in FIG. 2 is implemented by using the device shown in FIG. 5, the processor may be configured to: when a quantity of remaining tokens in a first token bucket does not satisfy that a first packet is to be removed from a queue, determine whether a length of a packet cached in the queue is less than a first threshold; and in response to that the length of the packet cached in the queue is not less than the first threshold, issue a token in a second token bucket to the first packet, and remove the first packet from the queue.

The communication bus 502 is configured to transmit information among the processor 501, the network interface 504, and the memory 503.

The memory 503 may be a read-only memory (Read-only Memory, ROM) or another type of static storage device that can store static information and instructions, or the memory 503 may be a random access memory (Random Access Memory, RAM) or another type of dynamic storage device that can store information and instructions, or may be a compact disc read-only memory (Compact Disc Read-only Memory, CD-ROM) or another compact disc storage, optical disc storage (including a compressed optical disc, a laser disc, an optical disc, a digital versatile optical disc, a Blu-ray disc, or the like), a magnetic disk storage medium or another magnetic storage device, or any other medium that can be configured to carry or store expected program code in a form of instructions or a data structure and can be accessed by a computer. This is not limited thereto. The memory 503 may exist independently, and is connected to the processor 501 through the communication bus 502. The memory 503 may alternatively be integrated with the processor 501.

Optionally, the memory 503 is configured to store program code or instructions for executing the technical solutions provided in embodiments of this application, and the processor 501 controls the execution. The processor 501 is configured to execute the program code or the instructions stored in the memory 503. The program code may include one or more software modules. Optionally, the processor 501 may also store the program code or the instructions for executing the technical solutions provided in embodiments of this application. In this case, the processor 501 does not need to read the program code or the instructions from the memory 503.

The network interface 504 may be an apparatus such as a transceiver, and is configured to communicate with another device or a communication network. The communication network may be Ethernet, a radio access network (RAN), a wireless local area network (Wireless Local Area Network, WLAN), or the like. In this embodiment of this application, the network interface 504 may be configured to receive a packet sent by another node in a segment routing network, or may send a packet to another node in a segment routing network. The network interface 504 may be an Ethernet interface (Ethernet) interface, a fast Ethernet (Fast Ethernet, FE) interface, a gigabit Ethernet (Gigabit Ethernet, GE) interface, or the like.

In specific implementation, in an embodiment, the device 500 may include a plurality of processors, for example, the processor 501 and a processor 505 shown in FIG. 5. Each of the processors may be a single-core (single-CPU) processor, or may be a multi-core (multi-CPU) processor. The processor herein may be one or more devices, circuits, and/or processing cores configured to process data (for example, computer program instructions).

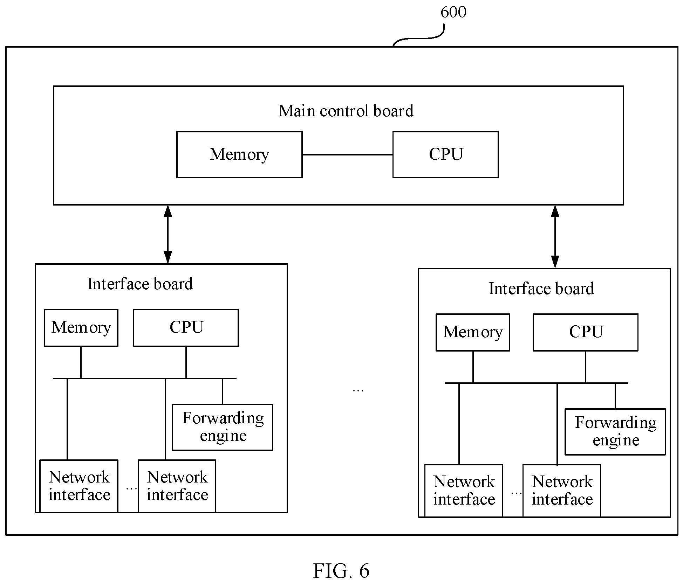

FIG. 6 is a schematic diagram of a structure of a device 600 according to an embodiment of this application. The first device in FIG. 2 or FIG. 3 may be implemented by using the device shown in FIG. 6. Refer to the schematic diagram of the structure of the device shown in FIG. 6. The device 600 includes a main control board and one or more interface boards. The main control board is communicatively connected to the interface board. The main control board is also referred to as a main processing unit (Main Processing Unit, MPU) or a route processor card (Route Processor Card). The main control board includes a CPU and a memory. The main control board is responsible for controlling and managing each component in the device 600, including route calculation, device management and function maintenance. The interface board is also referred to as a line processing unit (Line Processing Unit, LPU) or a line card (Line Card), and is configured to receive and send packets. In some embodiments, the main control board communicates with the interface board through a bus, or the interface boards communicate with each other through a bus. In some embodiments, the interface boards communicate with each other through a switching board. In this case, the device 600 also includes the switching board. The switching board is communicatively connected to the main control board and the interface board, and is configured to forward data between the interface boards. The switching board may also be referred to as a switch fabric unit (Switch Fabric Unit, SFU). The interface board includes a CPU, a memory, a forwarding engine, and an interface card (Interface Card, IC). The interface card may include one or more network interfaces. The network interface may be an Ethernet interface, an FE interface, a GE interface, or the like. The CPU is communicatively connected to the memory, the forwarding engine, and the interface card. The memory is configured to store a forwarding table. The forwarding engine is configured to forward a received packet based on the forwarding table stored in the memory. If a destination address of the received packet is an IP address of the device 600, the forwarding engine sends the packet to the CPU of the main control board or the CPU of the interface board for processing; or if a destination address of the received packet is not an IP address of the device 600, the forwarding engine searches the forwarding table based on the destination address, and if a next hop and an outbound interface that correspond to the destination address are found from the forwarding table, the forwarding engine forwards the packet to the outbound interface corresponding to the destination address. The forwarding engine may be a network processor (Network Processor, NP). The interface card, also referred to as a subcard, may be installed on the interface board. The interface card is responsible for converting an optical/electrical signal into a data frame, checking validity of the data frame, and forwarding the data frame to the forwarding engine for processing or the CPU of the interface board. In some embodiments, the CPU may also perform functions of the forwarding engine, such as implementing software forwarding based on a general-purpose CPU, so that no forwarding engine is required in the interface board. In some embodiments, the forwarding engine may be implemented by using an ASIC or a field programmable gate array (Field Programmable Gate Array, FPGA). In some embodiments, the memory that stores the forwarding table may alternatively be integrated into the forwarding engine, and is used as a part of the forwarding engine.

An embodiment of this application further provides a chip system, including a processor, where the processor is coupled to a memory, the memory is configured to store a program or instructions, and when the program or the instructions are executed by the processor, the chip system is enabled to implement the packet scheduling method performed by the first device in the embodiment shown in FIG. 2.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

For example, the chip system may be an FPGA, an ASIC, a system on chip (System on Chip, SoC), a CPU, an NP, a digital signal processing circuit (Digital Signal Processor, DSP), a micro controller unit (Micro Controller Unit, MCU), a programmable controller (Programmable Logic Device, PLD), or another integrated chip.

It should be understood that the steps in the foregoing method embodiments may be completed by using a hardware integrated logic circuit or instructions in a form of software in the processor. The steps of the methods disclosed with reference to embodiments of this application may be directly performed by a hardware processor, or may be performed by a combination of hardware in the processor and a software module.

An embodiment of this application further provides a computer-readable storage medium, including instructions. When the instructions are run on a computer, the computer is enabled to perform the packet scheduling method performed by the first device according to the foregoing method embodiments.

An embodiment of this application further provides a computer program product including instructions. When the computer program product is run on a computer, the computer is enabled to perform the packet scheduling method performed by the first device according to the foregoing method embodiments.

In the specification, claims, and accompanying drawings of this application, the terms "first", "second", "third", "fourth", and so on (if existent) are intended to distinguish between similar objects but do not necessarily indicate a specific order or sequence. It should be understood that the data termed in such a way are interchangeable in proper circumstances so that embodiments of the present invention described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, division into the units is merely logical module division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be obtained based on actual requirements to achieve the objectives of the solutions of embodiments.

In addition, module units in embodiments of this application may be integrated into one processing unit, or each of the units may exist alone physically, or two or more units are integrated into one unit. The integrated unit may be implemented in a form of hardware, or may be implemented in a form of a software module unit.

When the integrated unit is implemented in the form of a software module unit and sold or used as an independent product, the integrated unit may be stored in a computer-readable storage medium. Based on such an understanding, the technical solutions of this application essentially, or the part contributing to a current technology, or all or some of the technical solutions may be implemented in the form of a software product. The computer software product is stored in a storage medium and includes several instructions for instructing a computer device (which may be a personal computer, a server, or a network device) to perform all or some of the steps of the methods described in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

A person skilled in the art should be aware that in the foregoing one or more examples, functions described in the present invention may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer storage medium and a communication medium, where the communication medium includes any medium that enables a computer program to be transmitted from one place to another. The storage medium may be any available medium accessible to a general-purpose or a dedicated computer.

The objectives, technical solutions, and beneficial effects of the present invention are further described in detail in the foregoing specific implementations. It should be understood that the foregoing descriptions are merely specific implementations of the present invention.

In conclusion, the foregoing embodiments are merely intended for describing the technical solutions of this application, but not for limiting this application. Although this application is described in detail with reference to the foregoing embodiments, a person of ordinary skill in the art should understand that modifications may still be made to the technical solutions described in the foregoing embodiments or equivalent replacements may be made to some technical features, and such modifications or replacements do not cause the essence of the corresponding technical solutions to depart from the scope of the technical solutions of embodiments of this application.

## Claims

1. A packet scheduling method, wherein the method comprises:
when a quantity of remaining tokens in a first token bucket of a first device does not satisfy that a first packet is to be removed from a queue, determining (S201), by the first device, whether a length of a packet cached in the queue is less than a first threshold; and
in response to that the length of the packet cached in the queue is not less than the first threshold, issuing (S202), by the first device, a token in a second token bucket to the first packet, and removing the first packet from the queue, wherein the method is **characterized by** further comprising:
when the quantity of remaining tokens in the first token bucket of the first device does not satisfy that a second packet is to be removed from the queue, determining (S307), by the first device, whether the length of the packet cached in the queue is less than the first threshold; and
in response to that the length of the packet cached in the queue is less than the first threshold, keeping (S310), by the first device, the second packet in the queue before the quantity of remaining tokens in the first token bucket can satisfy that the second packet is to be removed from the queue, and
wherein after the keeping (S310) the second packet in the queue, the method further comprises:
determining (S311), by the first device, that the quantity of remaining tokens in the first token bucket satisfies that the second packet is to be removed from the queue; and
issuing (S311), by the first device, a token in the first token bucket to the second packet, and removing the second packet from the queue.

2. The method according to claim 1, wherein the removing the first packet from the queue comprises:
sending (S309), by the first device, the first packet through a first path, wherein the first path is a forwarding path corresponding to the second token bucket, link quality of the first path is lower than link quality of a second path, and the second path is a forwarding path corresponding to the first token bucket.

3. The method according to claim 2, wherein a network type of an access network in which the first path is located is different from a network type of an access network in which the second path is located.

4. The method according to claim 1, wherein the removing the first packet from the queue comprises:
sending, by the first device, the first packet based on a first priority, wherein the first priority is a forwarding priority corresponding to the second token bucket, a forwarding priority of the first priority is lower than a forwarding priority of a second priority, and the forwarding priority of the second priority is a forwarding priority corresponding to the first token bucket.

5. The method according to claim 1, wherein the removing the second packet from the queue comprises:
sending (S306), by the first device, the second packet through the second path, wherein the second path is the forwarding path corresponding to the first token bucket.

6. The method according to claim 1, wherein the removing the second packet from the queue comprises:
sending, by the first device, the second packet based on the second priority, wherein the second priority is the forwarding priority corresponding to the first token bucket.

7. The method according to claims 1 to 6, wherein before the determining, by the first device, whether a length of a packet cached in the queue is less than a first threshold, the method further comprises:
in response to that a third packet is added to the queue, determining, by the first device, whether the quantity of remaining tokens in the first token bucket satisfies that the first packet is to be removed from the queue.

8. A packet scheduling apparatus (400), wherein the apparatus is used in a first device and comprises:
a determining unit (410), configured to: when a quantity of remaining tokens in a first token bucket does not satisfy that a first packet is to be removed from a queue, determine whether a length of a packet cached in the queue is less than a first threshold; and
a scheduling unit (420), configured to: in response to that the length of the packet cached in the queue is not less than the first threshold, issue a token in a second token bucket to the first packet, and remove the first packet from the queue,
wherein the apparatus is **characterized by** further comprising that :
the determining unit (410) is further configured to: when the quantity of remaining tokens in the first token bucket does not satisfy that a second packet is to be removed from the queue, determine whether the length of the packet cached in the queue is less than the first threshold; and
the scheduling unit (420) is further configured to: in response to that the length of the packet cached in the queue is less than the first threshold, keep the second packet in the queue before the quantity of remaining tokens in the first token bucket can satisfy that the second packet is to be removed from the queue, and
wherein
the determining unit (410) is further configured to determine that the quantity of remaining tokens in the first token bucket satisfies that the second packet is to be removed from the queue; and
the scheduling unit (420) is further configured to issue a token in the first token bucket to the second packet, and remove the second packet from the queue.

9. The apparatus (400) according to claim 8, wherein the apparatus further comprises a sending unit,
wherein the sending unit is configured to send the first packet through a first path, wherein the first path is a forwarding path corresponding to the second token bucket, link quality of the first path is lower than link quality of a second path, and the second path is a forwarding path corresponding to the first token bucket

10. The apparatus (400) according to claim 8, wherein the apparatus further comprises a sending unit, wherein
the sending unit is configured to send the first packet based on a first priority, wherein the first priority is a forwarding priority corresponding to the second token bucket, a forwarding priority of the first priority is lower than a forwarding priority of a second priority, and the forwarding priority of the second priority is a forwarding priority corresponding to the first token bucket.

11. The apparatus (400) according to claim 8, wherein the apparatus further comprises the sending unit, wherein
the sending unit is configured to send the second packet through the second path, wherein the second path is the forwarding path corresponding to the first token bucket.

12. The apparatus (400) according to claim 8, wherein the apparatus further comprises the sending unit, wherein
the sending unit is configured to send the second packet based on the second priority, wherein the second priority is the forwarding priority corresponding to the first token bucket.

13. The apparatus (400) according to one of the claims 8 to 12, wherein
the scheduling unit (420) is further configured to: in response to that a third packet is added to the queue, determine whether the quantity of remaining tokens in the first token bucket satisfies that the first packet is to be removed from the queue.

14. A chip, comprising a memory and a processor, wherein the memory is configured to store instructions or program code, and the processor is configured to invoke the instructions or the program code from the memory and run the instructions or the program code, to perform the packet scheduling method according to any one of claims 1 7.

15. A computer-readable storage medium, comprising instructions, a program, or code, wherein when the instructions, the program, or the code is executed on a computer, the computer is enabled to perform the packet scheduling method according to any one of claims 1 to 7.

## Patentansprüche

1. Paketplanungsverfahren, wobei das Verfahren Folgendes umfasst:
wenn eine Menge verbleibender Token in einem ersten Token-Bucket einer ersten Vorrichtung nicht ausreicht, um ein erstes Paket aus einer Warteschlange zu entfernen, Bestimmen (S201) durch die erste Vorrichtung, ob eine Länge eines in der Warteschlange zwischengespeicherten Pakets kleiner als ein erster Schwellenwert ist; und
als Reaktion darauf, dass die Länge des in der Warteschlange zwischengespeicherten Pakets nicht kleiner als der erste Schwellenwert ist, Ausgeben (S202) eines Tokens in einem zweiten Token-Bucket durch die erste Vorrichtung für das erste Paket und Entfernen des ersten Pakets aus der Warteschlange, wobei das Verfahren **dadurch gekennzeichnet ist, dass** es weiterhin Folgendes umfasst:
wenn die Menge der verbleibenden Token im ersten Token-Bucket der ersten Vorrichtung nicht ausreicht, um ein zweites Paket aus der Warteschlange zu entfernen, Bestimmen (S307) durch die erste Vorrichtung, ob die Länge des in der Warteschlange zwischengespeicherten Pakets kleiner als der erste Schwellenwert ist; und
als Reaktion darauf, dass die Länge des in der Warteschlange zwischengespeicherten Pakets kleiner als der erste Schwellenwert ist, Behalten (S310) des zweiten Pakets in der Warteschlange durch die erste Vorrichtung, bevor die Menge der verbleibenden Token im ersten Token-Bucket ausreicht, um das zweite Paket aus der Warteschlange zu entfernen, und
wobei das Verfahren nach dem Behalten (S310) des zweiten Pakets in der Warteschlange weiterhin Folgendes umfasst:
Bestimmen (S311) durch die erste Vorrichtung, dass die Menge der verbleibenden Token im ersten Token-Bucket ausreicht, damit das zweite Paket aus der Warteschlange entfernt werden kann; und
Ausgeben (S311) eines Tokens im ersten Token-Bucket durch die erste Vorrichtung für das zweite Paket und Entfernen des zweiten Pakets aus der Warteschlange.

2. Verfahren nach Anspruch 1, wobei das Entfernen des ersten Pakets aus der Warteschlange Folgendes umfasst:
Senden (S309) des ersten Pakets durch die erste Vorrichtung über einen ersten Pfad, wobei der erste Pfad ein Weiterleitungspfad ist, der dem zweiten Token-Bucket entspricht, die Verbindungsqualität des ersten Pfads niedriger ist als die Verbindungsqualität eines zweiten Pfads und der zweite Pfad ein Weiterleitungspfad ist, der dem ersten Token-Bucket entspricht.

3. Verfahren nach Anspruch 2, wobei sich ein Netzwerktyp eines Zugangsnetzwerks, in dem sich der erste Pfad befindet, von einem Netzwerktyp eines Zugangsnetzwerks, in dem sich der zweite Pfad befindet, unterscheidet.

4. Verfahren nach Anspruch 1, wobei das Entfernen des ersten Pakets aus der Warteschlange Folgendes umfasst:
Senden des ersten Pakets durch die erste Vorrichtung basierend auf einer ersten Priorität, wobei die erste Priorität eine Weiterleitungspriorität ist, die dem zweiten Token-Bucket entspricht, eine Weiterleitungspriorität der ersten Priorität niedriger ist als eine Weiterleitungspriorität einer zweiten Priorität und die Weiterleitungspriorität der zweiten Priorität eine Weiterleitungspriorität ist, die dem ersten Token-Bucket entspricht.

5. Verfahren nach Anspruch 1, wobei das Entfernen des zweiten Pakets aus der Warteschlange Folgendes umfasst:
Senden (S306) des zweiten Pakets durch die erste Vorrichtung über den zweiten Pfad, wobei der zweite Pfad der Weiterleitungspfad ist, der dem ersten Token-Bucket entspricht.

6. Verfahren nach Anspruch 1, wobei das Entfernen des zweiten Pakets aus der Warteschlange Folgendes umfasst:
Senden des zweiten Pakets durch die erste Vorrichtung basierend auf der zweiten Priorität, wobei die zweite Priorität die Weiterleitungspriorität ist, die dem ersten Token-Bucket entspricht.

7. Verfahren nach den Ansprüchen 1 bis 6, wobei das Verfahren vor dem Bestimmen durch die erste Vorrichtung, ob eine Länge eines in der Warteschlange zwischengespeicherten Pakets kleiner als ein erster Schwellenwert ist, ferner Folgendes umfasst:
als Reaktion darauf ein drittes Paket zur Warteschlange hinzugefügt wird, und Bestimmen, durch die erste Vorrichtung, ob die Menge der verbleibenden Token im ersten Token-Bucket ausreicht, um das erste Paket aus der Warteschlange zu entfernen.

8. Paketplanungsvorrichtung (400), wobei die Vorrichtung in einer ersten Vorrichtung verwendet wird und Folgendes umfasst:
eine Bestimmungseinheit (410), die für Folgendes konfiguriert ist: wenn eine Menge verbleibender Token in einem ersten Token-Bucket nicht ausreicht, um ein erstes Paket aus einer Warteschlange zu entfernen, Bestimmen, ob eine Länge eines in der Warteschlange zwischengespeicherten Pakets kleiner als ein erster Schwellenwert ist; und
eine Planungseinheit (420), die dazu konfiguriert ist, als Reaktion darauf, dass die Länge des in der Warteschlange zwischengespeicherten Pakets nicht kleiner als der erste Schwellenwert ist, ein Token in einem zweiten Token-Bucket für das erste Paket auszugeben und das erste Paket aus der Warteschlange zu entfernen,
wobei die Vorrichtung **dadurch gekennzeichnet ist, dass** sie weiterhin Folgendes umfasst:
die Bestimmungseinheit (410) ist ferner konfiguriert zum: wenn die Menge der verbleibenden Token im ersten Token-Bucket nicht ausreicht, um ein zweites Paket aus der Warteschlange zu entfernen, Bestimmen, ob die Länge des in der Warteschlange zwischengespeicherten Pakets kleiner als der erste Schwellenwert ist; und
die Planungseinheit (420) ist ferner konfiguriert zum: als Reaktion darauf, dass die Länge des in der Warteschlange zwischengespeicherten Pakets kleiner als der erste Schwellenwert ist, Behalten des zweiten Pakets in der Warteschlange, bis die Menge der verbleibenden Token im ersten Token-Bucket ausreicht, um das zweite Paket aus der Warteschlange zu entfernen, und
wobei
die Bestimmungseinheit (410) ferner konfiguriert ist, zu bestimmen, dass die Menge der verbleibenden Token im ersten Token-Bucket ausreicht, um das zweite Paket aus der Warteschlange zu entfernen; und
die Planungseinheit (420) ferner konfiguriert ist, um ein Token im ersten Token-Bucket für das zweite Paket auszugeben und das zweite Paket aus der Warteschlange zu entfernen.

9. Vorrichtung (400) nach Anspruch 8, wobei die Vorrichtung weiterhin eine Sendeeinheit umfasst,
wobei die Sendeeinheit so konfiguriert ist, dass sie das erste Paket über einen ersten Pfad sendet, wobei der erste Pfad ein Weiterleitungspfad ist, der dem zweiten Token-Bucket entspricht,
die Verbindungsqualität des ersten Pfads niedriger ist als die Verbindungsqualität eines zweiten Pfads und der zweite Pfad ein Weiterleitungspfad ist, der dem ersten Token-Bucket entspricht.

10. Vorrichtung (400) nach Anspruch 8, wobei die Vorrichtung ferner eine Sendeeinheit umfasst, wobei
die Sendeeinheit konfiguriert ist, um das erste Paket basierend auf einer ersten Priorität zu senden, wobei die erste Priorität eine Weiterleitungspriorität ist, die dem zweiten Token-Bucket entspricht, eine Weiterleitungspriorität der ersten Priorität niedriger ist als eine Weiterleitungspriorität einer zweiten Priorität, und die Weiterleitungspriorität der zweiten Priorität eine Weiterleitungspriorität ist, die dem ersten Token-Bucket entspricht.

11. Vorrichtung (400) nach Anspruch 8, wobei die Vorrichtung ferner die Sendeeinheit umfasst, wobei
die Sendeeinheit konfiguriert ist, um das zweite Paket über den zweiten Pfad zu senden, wobei der zweite Pfad der Weiterleitungspfad ist, der dem ersten Token-Bucket entspricht.

12. Vorrichtung (400) nach Anspruch 8, wobei die Vorrichtung ferner die Sendeeinheit umfasst, wobei
die Sendeeinheit konfiguriert ist, um das zweite Paket basierend auf der zweiten Priorität zu senden, wobei die zweite Priorität die Weiterleitungspriorität ist, die dem ersten Token-Bucket entspricht.

13. Vorrichtung (400) nach einem der Ansprüche 8 bis 12, wobei die Planungseinheit (420) ferner konfiguriert ist zum: als Reaktion darauf, dass ein drittes Paket zur Warteschlange hinzugefügt wird, Bestimmen, ob die Menge der verbleibenden Token im ersten Token-Bucket ausreicht, um das erste Paket aus der Warteschlange zu entfernen.

14. Chip, der einen Speicher und einen Prozessor umfasst, wobei der Speicher zum Speichern von Anweisungen oder Programmcode konfiguriert ist und der Prozessor zum Aufrufen der Anweisungen oder des Programmcodes aus dem Speicher und zum Ausführen der Anweisungen oder des Programmcodes konfiguriert ist, um das Paketplanungsverfahren nach einem der Ansprüche 1 bis 7 durchzuführen.

15. Computerlesbares Speichermedium, umfassend Anweisungen, ein Programm oder Code, wobei, wenn die Anweisungen, das Programm oder der Code auf einem Computer ausgeführt werden, der Computer in die Lage versetzt wird, das Paketplanungsverfahren nach einem der Ansprüche 1 bis 7 auszuführen.

## Revendications

1. Procédé de planification de paquets, dans lequel le procédé comprend :
lorsqu'une quantité de jetons restants dans un premier compartiment de jetons d'un premier dispositif ne satisfait pas le fait qu'un premier paquet doit être supprimé **d'une** file d'attente, la détermination (S201), par le premier dispositif, si une longueur d'un paquet mis en cache dans la file d'attente est inférieure à un premier seuil ; et
en réponse au fait que la longueur du paquet mis en cache dans la file d'attente n'est pas inférieure au premier seuil, l'émission (S202), par le premier dispositif, d'un jeton dans un second compartiment de jetons vers le premier paquet, et le retrait du premier paquet de la file d'attente, dans lequel le procédé est **caractérisé en ce qu'**il comprend également :
lorsque la quantité de jetons restants dans le premier compartiment de jetons d'un premier dispositif ne satisfait pas le fait qu'un second paquet doit être supprimé de la file d'attente, la détermination (S307), par le premier dispositif, de la question de savoir si la longueur du paquet mis en cache dans la file d'attente est inférieure au premier seuil ; et
en réponse au fait que la longueur du paquet mis en cache dans la file d'attente est inférieure au premier seuil, le maintien (S310), par le premier dispositif, du second paquet dans la file d'attente avant que la quantité de jetons restants dans le premier compartiment de jetons puisse satisfaire au fait que le second paquet doit être supprimé de la file d'attente, et
dans lequel, après le maintien (S310) du second paquet dans la file d'attente, le procédé comprend également :
la détermination (S311), par le premier dispositif, que la quantité de jetons restants dans le premier compartiment de jetons satisfait le fait que le second paquet doit être retiré de la file d'attente ; et
l'émission (S311), par le premier dispositif, d'un jeton dans le premier compartiment de jetons vers le second paquet, et la suppression du second paquet de la file d'attente.

2. Procédé selon la revendication 1, dans lequel la suppression du premier paquet de la file d'attente comprend :
l'envoi (S309), par le premier dispositif, du premier paquet via un premier chemin, dans lequel le premier chemin est un chemin de transfert correspondant au second compartiment de jetons, la qualité de liaison du premier chemin est inférieure à la qualité de liaison d'un second chemin, et le second chemin est un chemin de transfert correspondant au premier compartiment de jetons.

3. Procédé selon la revendication 2, dans lequel un type de réseau d'un réseau d'accès dans lequel le premier chemin est situé est différent d'un type de réseau d'un réseau d'accès dans lequel le second chemin est situé.

4. Procédé selon la revendication 1, dans lequel la suppression du premier paquet de la file d'attente comprend :
l'envoi, par le premier dispositif, du premier paquet sur la base d'une première priorité, dans lequel la première priorité est une priorité de transfert correspondant au second compartiment de jetons, une priorité de transfert de la première priorité est inférieure à une priorité de transfert d'une seconde priorité, et la priorité de transfert de la seconde priorité est une priorité de transfert correspondant au premier compartiment de jetons.

5. Procédé selon la revendication 1, dans lequel la suppression du second paquet de la file d'attente comprend :
l'envoi (S306), par le premier dispositif, du second paquet via le second chemin, dans lequel le second chemin est le chemin de transfert correspondant au premier compartiment de jetons.

6. Procédé selon la revendication 1, dans lequel la suppression du second paquet de la file d'attente comprend :
l'envoi, par le premier dispositif, du second paquet sur la base de la seconde priorité, dans lequel la seconde priorité est la priorité de transfert correspondant au premier compartiment de jetons.

7. Procédé selon les revendications 1 à 6, dans lequel avant de déterminer, par le premier dispositif, si une longueur d'un paquet mis en cache dans la file d'attente est inférieure à un premier seuil, le procédé comprend également :
en réponse au fait qu'un troisième paquet est ajouté à la file d'attente, la détermination, par le premier dispositif, de la question de savoir si la quantité de jetons restants dans le premier compartiment de jetons satisfait la condition que le premier paquet doit être supprimé de la file d'attente.

8. Appareil de planification de paquets (400), dans lequel l'appareil est utilisé dans un premier dispositif et comprend :
une unité de détermination (410), configurée pour : lorsqu'une quantité de jetons restants dans un premier compartiment de jetons ne satisfait pas le fait qu'un premier paquet doit être supprimé d'une file d'attente, déterminer si une longueur d'un paquet mis en cache dans la file d'attente est inférieure à un premier seuil ; et
une unité de planification (420), configurée pour : en réponse au fait que la longueur du paquet mis en cache dans la file d'attente n'est pas inférieure au premier seuil, émettre un jeton dans un second compartiment de jetons vers le premier paquet, et supprimer le premier paquet de la file d'attente,
dans lequel l'appareil est **caractérisé en ce qu'**il comprend également :
l'unité de détermination (410) est également configurée pour :
lorsque la quantité de jetons restants dans le premier compartiment de jetons ne satisfait pas le fait qu'un second paquet doit être supprimé de la file d'attente, déterminer si la longueur du paquet mis en cache dans la file d'attente est inférieure au premier seuil ; et
l'unité de planification (420) est également configurée pour :
en réponse au fait que la longueur du paquet mis en cache dans la file d'attente est inférieure au premier seuil, maintenir le second paquet dans la file d'attente avant que la quantité de jetons restants dans le premier compartiment de jetons puisse satisfaire au fait que le second paquet doit être supprimé de la file d'attente, et
dans lequel
l'unité de détermination (410) est également configurée pour déterminer que la quantité de jetons restants dans le premier compartiment de jetons satisfait le fait que le second paquet doit être supprimé de la file d'attente ; et
l'unité de planification (420) est également configurée pour émettre un jeton dans le premier compartiment de jetons vers le second paquet, et supprimer le second paquet de la file d'attente.

9. Appareil (400) selon la revendication 8, dans lequel l'appareil comprend également une unité d'envoi,
dans lequel l'unité d'envoi est configurée pour envoyer le premier paquet via un premier chemin, dans lequel le premier chemin est un chemin de transfert correspondant au second compartiment de jetons, la qualité de liaison du premier chemin est inférieure à la qualité de liaison d'un second chemin, et le second chemin est un chemin de transfert correspondant au premier compartiment de jetons.

10. Appareil (400) selon la revendication 8, dans lequel l'appareil comprend également une unité d'envoi, dans lequel l'unité d'envoi est configurée pour envoyer le premier paquet sur la base d'une première priorité, dans lequel la première priorité est une priorité de transfert correspondant au second compartiment de jetons, une priorité de transfert de la première priorité est inférieure à une priorité de transfert d'une seconde priorité, et la priorité de transfert de la seconde priorité est une priorité de transfert correspondant au premier compartiment de jetons.

11. Appareil (400) selon la revendication 8, dans lequel l'appareil comprend également l'unité d'envoi, dans lequel l'unité d'envoi est configurée pour envoyer le second paquet via le second chemin, dans lequel le second chemin est le chemin de transfert correspondant au premier compartiment de jetons.

12. Appareil (400) selon la revendication 8, dans lequel l'appareil comprend également l'unité d'envoi, dans lequel l'unité d'envoi est configurée pour envoyer le second paquet sur la base de la seconde priorité, dans lequel la seconde priorité est la priorité de transfert correspondant au premier compartiment de jetons.

13. Appareil (400) selon l'une des revendications 8 à 12, dans lequel
l'unité de planification (420) est également configurée pour :
en réponse au fait qu'un troisième paquet est ajouté à la file d'attente, déterminer si la quantité de jetons restants dans le premier compartiment de jetons satisfait la condition que le premier paquet doit être supprimé de la file d'attente.

14. Puce, comprenant une mémoire et un processeur, dans laquelle la mémoire est configurée pour stocker des instructions ou un code de programme, et le processeur est configuré pour invoquer les instructions ou le code de programme à partir de la mémoire et exécuter les instructions ou le code de programme, pour mettre en œuvre le procédé de planification de paquets selon l'une quelconque des revendications 1 à 7.

15. Support de stockage lisible par ordinateur, comprenant des instructions, un programme ou un code, dans lequel, lorsque les instructions, le programme ou le code sont exécutés sur un ordinateur, cela permet à l'ordinateur de mettre en œuvre le procédé de planification de paquets selon l'une quelconque des revendications 1 à 7.
